# EUROPEAN PATENT SPECIFICATION

(11) **EP 3 699 002 B1**
(45) Date of publication and mention of the grant of the patent: **30.11.2022**
(21) Application number: 18868870.9
(22) Date of filing: 16.10.2018
(51) Int. Cl.: B60H 1/00, B62D 25/02

(54) **FIXING DEVICE FOR VEHICLE AIR-CONDITIONING PIPE**
BEFESTIGUNGSVORRICHTUNG FÜR LEITUNGSROHR EINER FAHRZEUGKLIMAANLAGE
DISPOSITIF DE FIXATION POUR TUYAU DE CLIMATISEUR DE VÉHICULE

(30) Priority: 16.10.2017 CN 201721327695 U
(43) Date of publication of application: 26.08.2020
(73) Proprietor: NIO (Anhui) Holding Co., Ltd., Hefei City, Anhui Province (CN)
(72) Inventor: LIU, Jian, Shanghai (CN); CHEN, Luobing, Shanghai (CN)
(74) Representative: Vossius & Partner Patentanwälte Rechtsanwälte mbB
(86) International application number: PCT/CN2018/110418
(87) International publication number: WO 2019/076298

(56) References cited:
- CN-A- 105 966 467
- CN-U- 205 136 834
- CN-U- 207 360 031
- DE-A1-102013 004 852
- DE-A1-102014 001 092
- JP-A- 2001 355 925
- JP-A- 2004 299 453
- JP-U- H0 335 878
- US-A1- 2004 154 326

## Description

### Field of the Invention

The present invention relates to a vehicle air conditioning pipe fixing device.

### Background of the Invention

In the rear rows of most large seven-seat vehicles and some high-end electric vehicles, independent air conditioning boxes are arranged, and air conditioning refrigerant pipelines need to be arranged. The existing vehicle rear air conditioning box pipelines are arranged at the lower parts of the floors of the vehicles, but the lower parts of the floors are occupied by batteries, high-voltage lines and chassis pipelines, therefore, if the air conditioning pipes are arranged at the lower parts of the floors, it not only takes up space, but also creates great danger.

DE 10 2013 004852 A1 describes a rocker panel for a vehicle body having an elongated reinforcing component configured as a hollow profile made of metal, preferably of steel, and/or of plastic, preferably of fiber-reinforced plastic. In order for such a rocker panel to offer higher resistance against intrusion into the vehicle during a side collision at more favorable component costs compared to traditional rocker panels, and thus making a weight reduction of the vehicle body possible, the reinforcing component is constructed of a group of at least two, preferably three single profiles.

DE 10 2014 001092 A1 discloses a body component for a motor vehicle, which has a wall and a cavity at least partially enclosed by the wall. A hose-like liquid container is arranged in the cavity.

JP H03 35878 U discloses a vehicle module assembly structure, which includes a module having one skeleton member and another skeleton member. Each of the skeleton members has a closed cross-section skeleton member of a vehicle body divided along a longitudinal direction thereof. At least one of a wire harness and a tube is held and stored in a closed cross section constituted by connecting a divided skeleton member and the other skeleton member.

### Summary of the Invention

The purpose of the present invention is to overcome the shortcomings of the arrangement of the existing air conditioning pipe, and to provide a vehicle air conditioning pipe fixing device of a new structure, and the technical problem to be solved is to provide a safe and stable vehicle air conditioning pipe fixing device for supporting, fixing and protecting an air conditioning pipeline.

The purpose of the present invention and the technical problem to be solved are achieved by the vehicle air conditioning pipe fixing device of independent claim 1. The vehicle air conditioning pipe fixing device proposed according to the present invention includes: a body frame member, wherein the body frame member is provided with a first accommodating space; and an air conditioning pipe bracket that can be accommodated in the first accommodating space, wherein the length direction of the air conditioning pipe bracket is consistent with the length direction of the first accommodating space, and the air conditioning pipe bracket is provided with a second accommodating space for accommodating and supporting at least a part of an air conditioning pipeline. The inner wall of the first accommodating space is provided with a supporting member for supporting the air conditioning pipe bracket, and, in a direction perpendicular to the length direction, the supporting member can limit the movement of the air conditioning pipe bracket; and one of the air conditioning pipe bracket and the supporting member is formed with chutes extending along the length direction, and the other is provided with matching members that are located in the chutes and are capable of sliding along the chutes, and the air conditioning pipe bracket is slidably supported in the body frame member through the cooperation of the chutes and the matching members.

Preferred embodiments of the present invention are laid down in the appended dependent claims.

Preferably, the body frame member includes a sill beam of a vehicle, and the sill beam is provided with the first accommodating space.

Preferably, the air conditioning pipe bracket is provided with at least two second accommodating spaces for accommodating and supporting at least a part of a high-voltage pipe and a low-voltage pipe of the air conditioning pipeline.

Preferably, limiting portion is arranged in the second accommodating space, and the limiting portion can abut against the air conditioning pipeline to prevent the radial movement of the air conditioning pipeline.

Preferably, the limiting portion comprises a protrusion arranged on an inner wall of the second accommodating space; and the protrusion and the inner wall together limit the radial position of the air conditioning pipeline to prevent, in the circumferential direction of the air conditioning pipeline, the radial movement of the air conditioning pipeline, or wherein the limiting portion comprises a plurality of protrusions arranged on the inner wall of the second accommodating space, and the plurality of protrusions limit the radial position of the air conditioning pipeline to prevent, in the circumferential direction of the air conditioning pipeline, the radial movement of the air conditioning pipeline.

Preferably, the air conditioning pipe bracket is further provided with a hollow cavity located between the two second accommodating spaces, so that the two second accommodating spaces are separated by the hollow cavity.

Preferably, the supporting member includes ribs, which are respectively arranged on a pair of inner walls that are arranged face-to-face in the first accommodating space, and the ribs are arranged as matching members in the corresponding chutes of the air conditioning pipe bracket.

Preferably, the air conditioning pipe bracket includes plate-shaped members arranged parallel to each other at intervals, and the length direction of the plate-shaped members is consistent with the length direction of the ribs; the chutes are formed among the plate-shaped members that are parallel to each other; or, the plate-shaped members are provided with flanges extending toward the ribs at both ends in the width direction, and the chutes are formed among the flanges at the two ends.

Preferably, the supporting member includes ribs, which are respectively arranged on a pair of inner walls that are arranged face-to-face in the first accommodating space, two groups of ribs are arranged on each of the inner wall and are arranged parallel to each other at intervals along the width direction of the inner wall, and the chutes are formed among the ribs that are parallel to each other.

By means of the above technical solutions, are achieved at least the following advantages and beneficial effects:
(1) By arranging at least a part of the air conditioning pipeline in the first accommodating space of the body frame member (such as the sill beam), the air conditioning pipeline can be effectively protected by the body frame member and can not be connected to the battery, the high-voltage line or the chassis pipeline, therefore, the safety is high, and a special anti-corrosion and anti-stone impact coating is saved at the same time;
(2) by means of the chutes formed by the flanges of the air conditioning pipe bracket and the ribs correspondingly arranged in the body frame member (such as the sill beam), the support and the radial fixation of the air conditioning pipe bracket by the body frame member are realized, and by arranging the second accommodating space and the limiting portion in the air conditioning pipe bracket, the support and the radial fixation of the air conditioning pipeline by the air conditioning pipe bracket are realized, thereby realizing the support and the radial fixation of the air conditioning pipeline by the body frame member; and
(3) it is convenient for final assembly, the air conditioning pipeline I and the plastic air conditioning pipe bracket are pre-assembled, and then are penetrated into the sill beam of the vehicle as a whole to improve the installation efficiency.

The above description is only an overview of the technical solutions of the present invention. In order understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig. 1 is a schematic diagram of a three-dimensional structure of a vehicle air conditioning pipe fixing device in which an air conditioning pipeline is accommodated, provided by one embodiment of the present invention.
Fig. 2 is a schematic diagram of a three-dimensional structure of an air conditioning pipeline and an air conditioning pipe bracket of a vehicle air conditioning pipe fixing device provided by one embodiment of the present invention.
Fig. 3 is a schematic diagram of a three-dimensional structure of an air conditioning pipe bracket in which a first air conditioning pipeline is accommodated, of a vehicle air conditioning pipe fixing device provided by one embodiment of the present invention.
Fig. 4 is an A-A section view of Fig. 3.
Fig. 5 is a schematic diagram of a three-dimensional structure of a vehicle air conditioning pipe fixing device provided by one embodiment of the present invention, wherein the vehicle air conditioning pipe fixing device includes a sill beam and an air conditioning pipe bracket.
Fig. 6 is a B-B section view of Fig. 5.

### [Reference Signs]

| | | | |
|---|---|---|---|
| 10: | air conditioning pipeline | 20: | sill beam |
| 21: | first accommodating space | 30: | air conditioning pipe bracket |
| 11: | first air conditioning pipeline | 12: | second air conditioning pipeline |
| 13: | pipeline butt joint structure | 31: | first side plate |
| 32: | second side plate | 33: | partition plate |
| 34: | flange | 22: | rib |

### Detailed Description of the Embodiments

In order to further illustrate the technical means and effects adopted in the present invention to achieve the intended purpose of the invention, specific embodiments and effects of a vehicle air conditioning pipe fixing device proposed in accordance with the present invention are described in detail below, in conjunction with the drawings and preferred embodiments.

It should be noted that the vehicle air conditioning pipe fixing device of the present invention is not limited to be applied to electric vehicles, but can be applied to various vehicles with air conditioning systems or air conditioning pipelines 10.

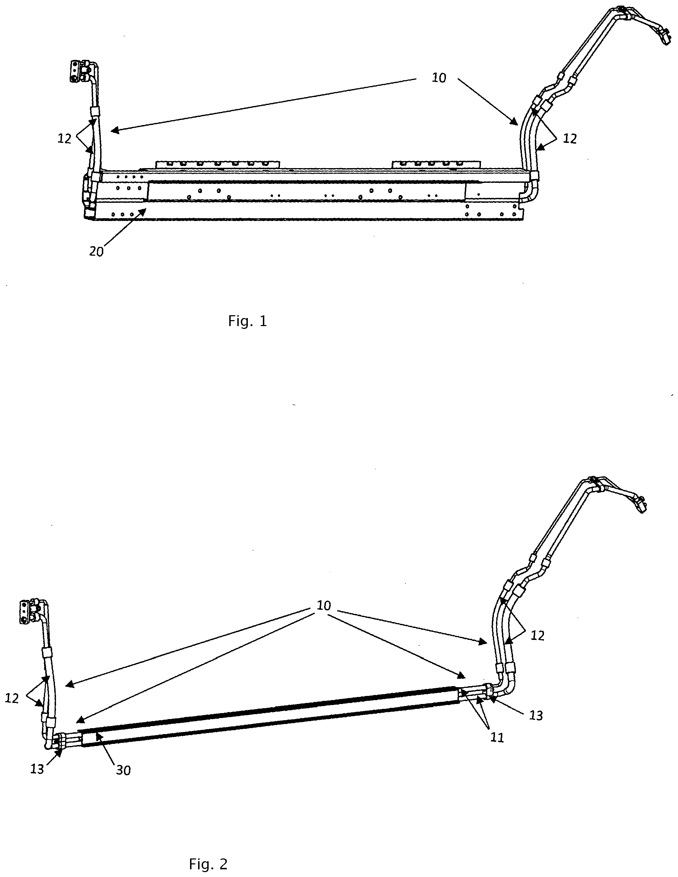

Please refer to Fig. 1, Fig. 2, Fig. 3, Fig. 4, Fig. 5 and Fig. 6, the vehicle air conditioning pipe fixing device according to the embodiment of the present invention mainly includes a body frame member, the body frame member is provided with a first accommodating space 21, which can be a hollow cavity, a groove or a gap for accommodating at least a part of the air conditioning pipeline 10. Further, the vehicle air conditioning pipe fixing device can further include an air conditioning pipe bracket 30, the air conditioning pipe bracket 30 can be accommodated in the first accommodating space 21 of the body frame member, the length direction of the air conditioning pipe bracket 30 is consistent with the length direction of the first accommodating space 21, and the air conditioning pipe bracket 30 is provided with a second accommodating space for accommodating and supporting at least a part of the air conditioning pipeline 10. Optionally, the material of the air conditioning pipe bracket 30 can be a plastic material.

It should be noted that, according to the layout position of the air conditioning pipeline 10, the body frame member can adopt various frame members having hollow cavities, grooves or gaps. In some embodiments, the body frame member includes a sill beam 20 of a vehicle, for example, it can be a sill beam 20 located below a side door of the vehicle, and a hollow cavity capable of accommodating the air conditioning pipeline 10 is arranged in the sill beam 20. The sill beam 20 provided with the first accommodating space 21 is mainly as an example of the body frame member in the following embodiments to better illustrate the present invention.

In addition, it should be noted that the length direction of the air conditioning pipe bracket 30 being consistent with the length direction of the first accommodating space 21 herein does not mean that the length direction of the air conditioning pipe bracket 30 must be exactly the same as the length direction of the first accommodating space 21, however, it is only convenient to explain the positional relationship between the air conditioning pipe bracket 30 and the first accommodating space 21, and the direction consistency herein can be understood that: the length direction of the air conditioning pipe bracket 30 is defined as the length direction of the first accommodating space 21. Similarly, the length direction of the first accommodating space 21 is not necessarily exactly the same as the length direction of the body frame member. In fact, the positions and directions of the air conditioning pipe bracket 30 and the first accommodating space 21 can be set according to the actual arrangement conditions, for example, the length directions of the body frame member, the first accommodating space 21 and the air conditioning pipe bracket 30 can be exactly the same or have certain angles with each other.

In some embodiments, the air conditioning pipeline 10 includes a first air conditioning pipeline 11, a second air conditioning pipeline 12, and a pipeline butt joint structure 13 for connecting the first air conditioning pipeline 11 and the second air conditioning pipeline 12.

The first air conditioning pipeline 11 can be accommodated in the sill beam 20. The first air conditioning pipeline 11 includes a high-voltage pipe and a low-voltage pipe. The first air conditioning pipeline 11 can be a straight pipe, or can be curved according to the shape of the air conditioning pipe bracket 30 or the shape of the sill beam 20.

The main body of the second air conditioning pipeline 12 is not accommodated in the sill beam 20. The second air conditioning pipeline 12 includes a high-voltage pipe and a low-voltage pipe. The joint of the second air conditioning pipeline 12 for connecting to the first air conditioning pipeline 11 can be provided with a bent portion that is approximately "L"-shaped to adapt to the shape of the sill of the vehicle. In addition, the "L"-shaped joint of the second air conditioning pipeline 12 can be accommodated in the sill beam 20 to protect the joint.

The pipeline butt joint structure 13 can adopt any structure capable of forming butt joint with the air conditioning pipeline 10, for example, the pipeline butt joint structure 13 can be a pipeline pressing plate, including a first joint connected to the first air conditioning pipeline 11 and a second joint connected to the second air conditioning pipeline 12, and the first joint and the second joint can be fastened together by bolts and nuts.

Optionally, since the two ends of the sill are closer to the tires, and in order to arrange the butt joint portions of the second air conditioning pipeline 12 and the first air conditioning pipeline 11 in the sill beam 20, the length of the first air conditioning pipeline 11 can be set to be shorter than the length of the sill beam 20. In one embodiment, the lengths of the "L"-shaped joint of the first air conditioning pipeline 11 and the second air conditioning pipeline 12 and the pipeline butt joint structure 13 can be set as follows: the total length after the three members are assembled together is approximately equal to the length of the first accommodating space 21 in the sill beam 20, so that the above three members can be arranged in the first accommodating space 21 at the same time, and the butt joint position of the pipeline can also be protected by the sill beam 20 as a result.

In some embodiments, the air conditioning pipe bracket 30 is provided with at least two second accommodating spaces for accommodating and supporting at least a part of the high-voltage pipe and the low-voltage pipe of the air conditioning pipeline 10. Further, the air conditioning pipe bracket 30 can be further provided with a hollow cavity located between the two second accommodating spaces so as to separate the two second accommodating spaces by the hollow cavity.

The second accommodating space of the air conditioning pipe bracket 30 can be a through hole whose radial cross section coincides with an outer wall of the air conditioning pipeline 10, so that the air conditioning pipe bracket 30 can be sleeved at the outside of the air conditioning pipeline 10; or, the second accommodating space can also be slot-shaped or cavity-shaped for accommodating the air conditioning pipeline 10.

In some embodiments, especially in some examples where the second accommodating space is slot-shaped or cavity-shaped, the air conditioning pipe bracket 30 further includes a limiting portion arranged in the second accommodating space, the limiting portion can abut against the air conditioning pipeline 10 to prevent the radial movement (movement perpendicular to the length direction of the air conditioning pipeline 10) of the air conditioning pipeline 10. For example, the limiting portion can include a protrusion arranged on the inner wall of the second accommodating space, and in the circumferential direction of the air conditioning pipeline 10, the radial movement of the air conditioning pipeline 10 is prevented by limiting the radial position of the air conditioning pipeline 10 through the protrusion and the inner wall of the second accommodating space together, or by limiting the radial position of the air conditioning pipeline 10 through a plurality of protrusions. Further, by arranging the protrusion on the inner wall of the second accommodating space, in the circumferential direction of the air conditioning pipeline 10, the inner wall and/or the protrusion of the second accommodating space abut against the air conditioning pipeline 10 one at least three locations, and the locations abutting against the air conditioning pipeline 10 can be called limiting locations. In the circumferential direction, if these limiting locations are in point contact with the air conditioning pipeline 10, at least three limiting points should not be located in half a circumference at the same time, so that the movement of the air conditioning pipeline 10 along the radial direction of the air conditioning pipeline 10 can be prevented. In addition, in the circumferential direction, if the inner wall and/or the protrusion of the second accommodating space is in surface contact with the outer wall of the air conditioning pipeline 10, two limiting locations can also be provided.

Optionally, the length of the air conditioning pipe bracket 30 can be less than the length of the sill beam 20, and can also be less than the length of the first air conditioning pipeline 11, so as to save space and materials, and to facilitate the butt joint of the first air conditioning pipeline 11 and the second air conditioning pipeline 12; and if there is sufficient space for layout or the above arrangement causes inconvenient installation, the length of the air conditioning pipe bracket 30 may not be less than the length of the sill beam 20.

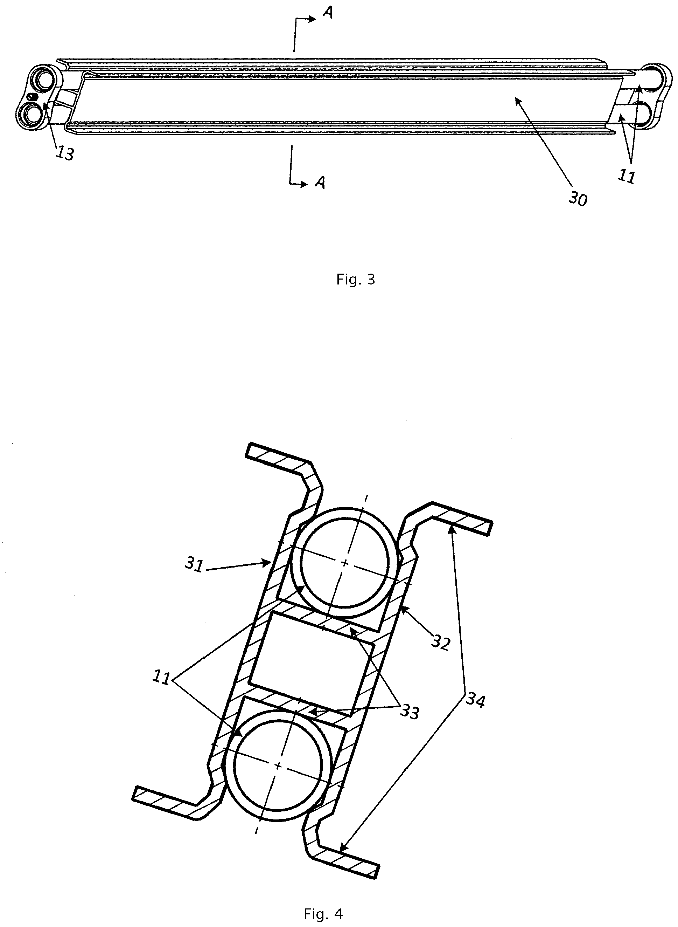

Specifically, please refer to Fig. 3 and Fig. 4 at the same time, in one embodiment, the air conditioning pipe bracket 30 includes two plate-shaped members arranged in parallel, and the two plate-shaped members can be called a first side plate 31 and a second side plate 32. The length directions of the two side plates, the length direction of the first accommodating space 21 in the sill beam 20 and the length direction of the first air conditioning pipeline 11 are consistent. The lengths of the two side plates are slightly less than the length of the first air conditioning pipeline 11 and are less than the length of the sill beam 20.

The distance between the first side plate 31 and the second side plate 32 is not less than the diameter of the first air conditioning pipeline 11 to be able to accommodate the first air conditioning pipeline 11; and optionally, the interval can be equal to the greater one of the diameters of the high-voltage pipe and the low-voltage pipe of the first air conditioning pipeline 11.

The first side plate 31 and the second side plate 32 are connected by a partition plate 33, and the specific connection mode can be integrally formed fixed connection. Only one partition plate 33 can be provided, so that two slot-shaped second accommodating spaces are formed among the first side plate 31, the second side plate 32 and the partition plate 33 for accommodating the high-voltage pipe and the low-voltage pipe of the first air conditioning pipeline 11; and two partition plates 33 can also be provided, so that two slot-shaped second accommodating spaces and a hollow cavity located between the two second accommodating spaces are formed among the first side plate 31, the second side plate 32 and the two partition plates 33, and the hollow cavity is used for separating the air conditioning high-voltage pipe and the air conditioning low-voltage pipe by a certain distance; or, more partition plates 33 can be provided to form a cavity-shaped second accommodating space or more second accommodating spaces.

It should be noted that the shapes, sizes and numbers of the above-mentioned second accommodating space and the side plate 31 and the partition plate 33 used to form the second accommodating space can be different according to different shapes, sizes and numbers of the air conditioning pipelines 10.

Two limiting portions are arranged in each second accommodating space, and are formed by bending the first side plate 31 and the second side plate 32 toward the interior of the second accommodating space, the limiting portion abuts against the outer wall of the first air conditioning pipeline 11, and the limiting portion is arranged at a location where the distance between the partition plates 33 constituting the second accommodating space is greater than the radius of the first air conditioning pipeline 11 and is less than the diameter of the first air conditioning pipeline 11. Therefore, the first air conditioning pipeline 11 can simultaneously abut against the two limiting portions and the partition plates 33 to prevent the radial movement of the first air conditioning pipeline 11.

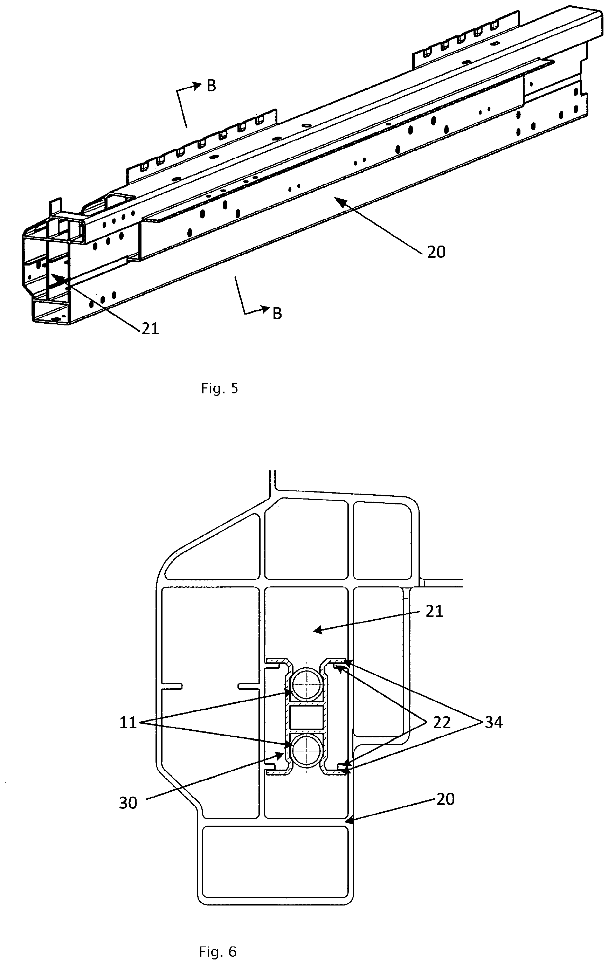

It should be noted that, when the air conditioning pipe bracket 30 has two or more second accommodating spaces, after the air conditioning pipe bracket 30 is accommodated in the body frame member, the relative positions of the plurality of second accommodating spaces of the air conditioning pipe bracket 30 are arbitrary and does not have to be the vertical arrangement as shown in Fig. 6, but can also be horizontal arrangement or inclined arrangement, and the specific arrangement can be decided based on the shape and size of the body frame member or the first accommodating space 21 in the body frame member. In addition, in the embodiment in which the air conditioning pipe bracket 30 has two longitudinally arranged second accommodating spaces, the high-voltage pipe can be placed in any one of the two second accommodating spaces, and the low-voltage pipe is placed in the other space.

The connection between the body frame member and the air conditioning pipe bracket 30 and the support of the air conditioning pipe bracket 30 can be achieved in various ways, for example:
In some embodiments, which do not belong to the present invention, the first accommodating space 21 in the body frame member can be set as a through hole whose shape matches the outer surface structure of the air conditioning pipe bracket 30, so that the air conditioning pipe bracket 30 can be detachably sleeved in the first accommodating space 21.

In some embodiments, which do not belong to the present invention, the air conditioning pipe bracket 30 and the first accommodating space 21 can be connected through threads, so that the air conditioning pipe bracket 30 can be detachably fixed in the first accommodating space 21.

In some embodiments, the inner wall of the first accommodating space 21 is provided with a supporting member for supporting the air conditioning pipe bracket 30; for example, the supporting member can be a rib 22 that is arranged in the first accommodating space 21 and extends along the length direction of the first accommodating space 21. The length direction of the air conditioning pipe bracket 30 is consistent with the length direction of the first accommodating space 21. The air conditioning pipe bracket 30 has a top end abutting against the inner wall of the first accommodating space 21 or the supporting member or a fitting surface fitting with the same, so as to accept the support of the inner wall of the first accommodating space 21 and the supporting member; for example, the air conditioning pipe bracket 30 can be provided with a plate-shaped member, the plate-shaped member has a fitting surface that serves as the supporting member and fits with the rib 22, and a top end abutting against the inner wall of the first accommodating space 21, or, a flange 34 extending toward the rib 22 is arranged on the plate-shaped member, and the flange 34 is provided with a fitting surface fitting with the rib 22 and a top end abutting against the inner wall of the first accommodating space 21. Through the contact between the inner wall of the first accommodating space 21 and the supporting member with the air conditioning pipe bracket 30, the supporting member can restrict the movement of the air conditioning pipe bracket 30 perpendicular to the length direction. Further, in order to provide stable support and to limit the movement of the air conditioning pipe bracket 30, the air conditioning pipe bracket 30 abuts against or fits with the inner wall of the first accommodating space 21 or the supporting member at multiple supporting positions, in the circumferential direction of the first accommodating space 21, at least two supporting positions can be located at the radial ends of the first accommodating space 21, or at least three supporting positions can not be located in half of the circumference at the same time; for example, the supporting members can be symmetrically arranged at a pair of inner walls that are arranged face-to-face in the first accommodating space 21. It should be noted that, in this example, if the supporting members are arranged in pairs in the circumferential direction of the first accommodation space 21, for example, two ribs 22 parallel to each other are arranged on each side of the pair of inner walls that are arranged face-to-face in the first accommodating space 21, then each pair of supporting members (each two ribs 22), and the components or side walls of the air conditioning pipe bracket 30 in contact with each pair of supporting members can be regarded as chutes and matching members of the chutes respectively.

Specifically, please refer to Fig. 4, Fig. 5 and Fig. 6 at the same time, in one embodiment, the air conditioning pipe bracket 30 includes two plate-shaped members arranged parallel to each other at intervals, the two plate-shaped members can be called the first side plate 31 and the second side plate 32, and the second accommodating space is located between the first side plate 31 and the second side plate 32. The length direction of the two side plates is consistent with the length direction of the first accommodating space 21. Flanges 34 that are overturned toward a direction away from the second side plate 32 (it can be called outward overturned) are arranged at the both ends of the first side plate 31 in the width direction, so that the outer surface of the first side plate 31 is formed as a first chute extending along the length direction of the first accommodating space 21, and flanges 34 that are overturned toward a direction away from the first side plate 31 (it can be called outward overturned) are arranged at the both ends of the second side plate 32 in the width direction, so that the outer surface of the second side plate 32 is formed as a second chute extending along the length direction of the first accommodating space 21. A matching member of the first chute and the matching member of the second chute are arranged in the first accommodating space 21 of the sill beam 20, each matching member includes two ribs 22 that are arranged in parallel at intervals on the inner wall of the first accommodating space 21, the length direction of the two ribs 22 is consistent with the length direction of the first accommodating space 21, the two side walls deviating from each other of the two ribs 22 (can be called the outer wall of the matching member) can simultaneously form surface contact with the inner wall of the chute to be fitted, so that the matching member can be accommodated in the chute. It should be noted that, when the chute is matched with the matching member, the arrangement direction of the flange 34 is parallel to the arrangement direction of the rib 22, or, the height direction of the flange 34 is parallel to the height direction of the rib 22. Moreover, the position and the height of the rib 22 are set in such a way that the first chute and the second chute can be simultaneously matched with the corresponding matching members, so that the air conditioning pipe bracket 30 can slide into the first accommodating space 21 of the door sill beam 20 and is supported by the sill beam 20 (it also means that the movement of the air conditioning pipe bracket 30 along the vertical direction in Fig. 6 is prevented).

Optionally, the top end of at least one of the two flanges 34 of the first side plate 31 and the top end of at least one of the two flanges 34 of the second side plate 32 can simultaneously abut against the inner wall of the first accommodating space 21, so as to prevent the movement of the air conditioning pipe holder 30 along the horizontal direction in Fig. 6, so that the movement of the air conditioning pipe holder 30 in the first accommodating space 21 can be restricted to movement only along the length direction of the rib 22. Or, in one embodiment which does not belong to the present invention, the connection between the air conditioning pipe bracket 30 and the sill beam 20 can also be achieved by interference fit or adhesion, so as to prevent the movement of the air conditioning pipe bracket 30 in the first accommodating space 21.

It should be noted that, in the length direction of the first accommodating space 21, each rib 22 can include one rib penetrating through the first accommodating space 21 and can also include a plurality of intermittent ribs along the same straight line.

It should be noted that, the number of ribs 22 as a matching member is not limited. In one example, a rib 22 that is wide enough to be accommodated in the chute can be used as the matching member of the chute to replace two ribs 22.

It should be noted that, the chute is not limited to be formed by arranging the flanges 34 on the side plate. For example, in one example, the air conditioning pipe bracket 30 includes two plate-shaped members (the first side plate 31 and the second side plate 32) arranged in parallel, the second accommodating space is located between the two plate-shaped members, the two opposite side walls of one end of the two plate-like members in the width direction are formed as the first chute, and the two opposite side walls of the other end are formed as the second chute, and the plate-like member extends toward the rib 22 arranged in the first accommodating space 21 in the width direction (or, the width direction of the plate-like member is parallel to the height direction of the rib 22), and the two chutes can form surface contact with the rib 22 to cooperate with each other, so that the sill beam 20 can accommodate and support the air conditioning pipe bracket 30. Further, the top ends of both ends of the two plate-shaped members in the width direction can abut against the inner wall of the first accommodating space 21.

In some embodiments, the ribs 22 arranged on the pair of inner walls that are arranged face-to-face in the first accommodating space 21 can also be used to form the chutes: two groups of ribs 22 are arranged on each inner wall and are arranged parallel to each other at intervals along the width direction of the inner wall, and the chutes are formed among the ribs 22 that are parallel to each other, and the matching members capable of being accommodated in the chutes are arranged on the air conditioning pipe bracket 30. For example, the example shown in Fig. 6 can be adjusted, so that the two side walls deviating from each other of the two flanges 34 of the side plate of the air conditioning pipe bracket 30 can simultaneously form surface contact with the two side walls that are opposite to each other of the two ribs located on one side of the inner wall of the first accommodating space 21, at this time, the chutes are formed between the pair of ribs 22, and the two flanges 34 of the side plate of the air conditioning pipe bracket 30 are formed as the matching members. It should be noted that, in this example, whether the matching members arranged on the air conditioning pipe bracket 30 are plate-shaped pieces and the number of the matching members are not limited, as long as the matching members can be accommodated in the chutes, and the air conditioning pipe bracket 30 is stably supported by the sill beam 20.

In some embodiments, the flanges 34 can also be arranged only at one ends of the two parallel plate-shaped members in the width direction, so that the radial cross section of the air conditioning pipe bracket 30 is "T"-shaped; and on the inner wall of the first accommodating space 21, ribs 22 are arranged at corresponding positions of the three ends of the "T" shape, so as to prevent the movement of the air conditioning pipe bracket 30 in a direction perpendicular to the length direction of the first accommodating space 21.

In addition, it should be noted that, when the present embodiment is observed from another viewpoint, each rib 22 can also be regarded as the supporting member arranged on the inner wall of the first accommodating space 21, and the flange 34 in surface contact with the rib 22 or the plate-shaped member in surface contact with the rib 22 is regarded as the matching member of the supporting member, and by the surface contact between the supporting member and the matching member and by abutting the top end of the plate-shaped member against the inner wall of the first accommodating space 21, the movement of the air conditioning pipe bracket 30 in the first accommodating space 21 in a direction perpendicular to the length direction of the first accommodating space 21 is prevented.

The above descriptions are only the preferred embodiments of the present invention, and do not limit the present invention in any form. Although the present invention has been disclosed in the preferred embodiments as above, the preferred embodiments are not used for limiting the present invention. A person skilled in the art can make some changes or modifications by using the technical contents disclosed above to serve as equivalent embodiments of equivalent changes, without departing from the scope of the present invention, which is defined by the appended claims.

## Claims

1. A vehicle air conditioning pipe fixing device, comprising:
a body frame member, wherein the body frame member is provided with a first accommodating space (21); and
an air conditioning pipe bracket (30) that can be accommodated in the first accommodating space (21), wherein the length direction of the air conditioning pipe bracket (30) is consistent with the length direction of the first accommodating space (21), and the air conditioning pipe bracket (30) is provided with a second accommodating space for accommodating and supporting at least a part of an air conditioning pipeline (10),
wherein an inner wall of the first accommodating space (21) is provided with a supporting member for supporting the air conditioning pipe bracket (30), and, in a direction perpendicular to the length direction, the supporting member can limit the movement of the air conditioning pipe bracket (30); **characterized in that**
one of the air conditioning pipe bracket (30) and the supporting member is formed with chutes extending along the length direction, and the other is provided with matching members that are located in the chutes and are capable of sliding along the chutes, and the air conditioning pipe bracket (30) is slidably supported in the body frame member through the cooperation of the chutes and the matching members.

2. The vehicle air conditioning pipe fixing device according to claim 1, wherein the body frame member comprises a sill beam (20) of a vehicle, the sill beam (20) is provided with the first accommodating space (21).

3. The vehicle air conditioning pipe fixing device according to claim 1, wherein:
the air conditioning pipe bracket (30) is provided with at least two second accommodating spaces for accommodating and supporting at least a part of a high-voltage pipe and a low-voltage pipe of the air conditioning pipeline (10).

4. The vehicle air conditioning pipe fixing device according to claim 1, wherein a limiting portion is arranged in the second accommodating space, and the limiting portion can abut against the air conditioning pipeline (10) to prevent the radial movement of the air conditioning pipeline (10).

5. The vehicle air conditioning pipe fixing device according to claim 4, wherein the limiting portion comprises a protrusion arranged on an inner wall of the second accommodating space; and the protrusion and the inner wall together limit the radial position of the air conditioning pipeline (10) to prevent, in the circumferential direction of the air conditioning pipeline (10), the radial movement of the air conditioning pipeline (10),
or
wherein the limiting portion comprises a plurality of protrusions arranged on the inner wall of the second accommodating space, and the plurality of protrusions limit the radial position of the air conditioning pipeline (10) to prevent, in the circumferential direction of the air conditioning pipeline (10), the radial movement of the air conditioning pipeline (10).

6. The vehicle air conditioning pipe fixing device according to claim 3, wherein the air conditioning pipe bracket (30) is further provided with a hollow cavity located between the two second accommodating spaces, so that the two second accommodating spaces are separated by the hollow cavity.

7. The vehicle air conditioning pipe fixing device according to claim 1, wherein:
the supporting member comprises ribs (22), which are respectively arranged on a pair of inner walls that are arranged face-to-face in the first accommodating space (21), and the ribs (22) are arranged as matching members in the corresponding chutes of the air conditioning pipe bracket (30).

8. The vehicle air conditioning pipe fixing device according to claim 7, wherein:
the air conditioning pipe bracket (30) comprises plate-shaped members arranged parallel to each other at intervals, and the length direction of the plate-shaped members is consistent with the length direction of the ribs (22); and
the chutes are formed among the plate-shaped members that are parallel to each other; or, the plate-shaped members are provided with flanges (34) extending toward the ribs (22) at both ends in the width direction, and the chutes are formed among the flanges (34) at the two ends.

9. The vehicle air conditioning pipe fixing device according to claim 1, wherein:
the supporting member comprises ribs (22), which are respectively arranged on a pair of inner walls that are arranged face-to-face in the first accommodating space (21), two groups of ribs (22) are arranged on each of the inner wall and are arranged parallel to each other at intervals along the width direction of the inner wall, and the chutes are formed among the ribs (22) that are parallel to each other.

## Patentansprüche

1. Befestigungsvorrichtung für ein Fahrzeugklimaanlagenrohr, umfassend:
ein Karosserierahmenelement, wobei das Karosserierahmenelement mit einem ersten Aufnahmeraum (21) versehen ist; und
eine Klimaanlagenrohrhalterung (30), die in dem ersten Aufnahmeraum (21) aufgenommen werden kann, wobei die Längsrichtung der Klimaanlagenrohrhalterung (30) mit der Längsrichtung des ersten Aufnahmeraums (21) übereinstimmt und die Klimaanlagenrohrhalterung (30) mit einem zweiten Aufnahmeraum zur Aufnahme und zum Abstützen zumindest eines Teils einer Klimaanlagenrohrleitung (10) versehen ist,
wobei eine Innenwand des ersten Aufnahmeraums (21) mit einem Stützelement zum Abstützen der Klimaanlagenrohrhalterung (30) versehen ist, und wobei das Stützelement senkrecht zur Längsrichtung die Bewegung der Klimaanlagenrohrhalterung (30) begrenzen kann;
**dadurch gekennzeichnet, dass**
die Klimaanlagenrohrhalterung (30) oder das Stützelement mit Rinnen ausgebildet ist, die sich entlang der Längsrichtung erstrecken, und das jeweils andere Element mit passenden Elementen versehen ist, die sich in den Rinnen befinden und entlang der Rinnen gleiten können, und wobei die Klimaanlagenrohrhalterung (30) durch Zusammenwirken der Rinnen und passenden Elemente in dem Karosserierahmenelement verschiebbar gestützt wird.

2. Befestigungsvorrichtung für ein Fahrzeugklimaanlagenrohr nach Anspruch 1, wobei das Karosserierahmenelement einen Schwellenbalken (20) eines Fahrzeugs umfasst, wobei der Schwellenbalken (20) mit dem ersten Aufnahmeraum (21) versehen ist.

3. Befestigungsvorrichtung für ein Fahrzeugklimaanlagenrohr nach Anspruch 1, wobei:
die Klimaanlagenrohrhalterung (30) mit mindestens zwei zweiten Aufnahmeräumen zur Aufnahme und zum Abstützen zumindest eines Teils eines Hochspannungsrohrs und eines Niederspannungsrohrs der Klimaanlagenrohrleitung (10) versehen ist.

4. Befestigungsvorrichtung für ein Fahrzeugklimaanlagenrohr nach Anspruch 1, wobei ein Begrenzungsabschnitt im zweiten Aufnahmeraum angeordnet ist und der Begrenzungsabschnitt an der Klimaanlagenrohrleitung (10) anliegen kann, um die Radialbewegung der Klimaanlagenrohrleitung (10) zu verhindern.

5. Befestigungsvorrichtung für ein Fahrzeugklimaanlagenrohr nach Anspruch 4, wobei der Begrenzungsabschnitt einen Vorsprung umfasst, der an einer Innenwand des zweiten Aufnahmeraums angeordnet ist; und wobei der Vorsprung und die Innenwand zusammen die Radialposition der Klimaanlagenrohrleitung (10) begrenzen, um in Umfangsrichtung der Klimaanlagenrohrleitung (10) die Radialbewegung der Klimaanlagenrohrleitung (10) zu verhindern,
oder
wobei der Begrenzungsabschnitt mehrere Vorsprünge umfasst, die an der Innenwand des zweiten Aufnahmeraums angeordnet sind, und wobei die mehreren Vorsprünge die Radialposition der Klimaanlagenrohrleitung (10) begrenzen, um in Umfangsrichtung der Klimaanlagenrohrleitung (10) die Radialbewegung der Klimaanlagenrohrleitung (10) zu verhindern.

6. Befestigungsvorrichtung für ein Fahrzeugklimaanlagenrohr nach Anspruch 3, wobei die Klimaanlagenrohrhalterung (30) ferner mit einem Hohlraum versehen ist, der sich zwischen den zwei zweiten Aufnahmeräumen befindet, sodass die zwei zweiten Aufnahmeräume von dem Hohlraum getrennt werden.

7. Befestigungsvorrichtung für ein Fahrzeugklimaanlagenrohr nach Anspruch 1, wobei:
das Stützelement Rippen (22) umfasst, die jeweils an einem Paar Innenwände angeordnet sind, die im ersten Aufnahmeraum (21) einander zugewandt angeordnet sind, und wobei die Rippen (22) als passende Elemente in den zugehörigen Rinnen der Klimaanlagenrohrhalterung (30) angeordnet sind.

8. Befestigungsvorrichtung für ein Fahrzeugklimaanlagenrohr nach Anspruch 7, wobei:
die Klimaanlagenrohrhalterung (30) plattenförmige Elemente umfasst, die in Intervallen parallel zueinander angeordnet sind, und wobei die Längsrichtung der plattenförmigen Elemente mit der Längsrichtung der Rippen (22) übereinstimmt; und
die Rinnen inmitten der plattenförmigen Elemente ausgebildet sind, die parallel zueinander sind; oder
wobei die plattenförmigen Elemente mit Flanschen (34) versehen sind, die sich an beiden Enden in Breitenrichtung zu den Rippen (22) erstrecken, und wobei die Rinnen inmitten der Flansche (34) an den zwei Enden ausgebildet sind.

9. Befestigungsvorrichtung für ein Fahrzeugklimaanlagenrohr nach Anspruch 1, wobei:
das Stützelement Rippen (22) umfasst, die jeweils an einem Paar Innenwände angeordnet sind, die in dem ersten Aufnahmeraum (21) einander zugewandt angeordnet sind, und wobei zwei Gruppen von Rippen (22) auf beiden Innenwänden angeordnet sind und in Intervallen entlang der Breitenrichtung der Innenwand parallel zueinander angeordnet sind, und wobei die Rinnen inmitten der Rippen (22) ausgebildet sind, die parallel zueinander sind.

## Revendications

1. Dispositif de fixation de tuyau de climatisation de véhicule, comprenant :
un élément de cadre de carrosserie, dans lequel l'élément de cadre de carrosserie est pourvu d'un premier espace de logement (21) ; et
un appui de tuyau de climatisation (30) qui peut être logé dans le premier espace de logement (21), dans lequel le sens de la longueur de l'appui de tuyau de climatisation (30) correspond au sens de la longueur du premier espace de logement (21), et l'appui de tuyau de climatisation (30) est pourvu d'un second espace de logement pour loger et supporter au moins une partie d'une conduite de climatisation (10),
dans lequel une paroi intérieure du premier espace de logement (21) est pourvue d'un élément de support pour supporter l'appui de tuyau de climatisation (30), et, dans un sens perpendiculaire au sens de la longueur, l'élément de support peut limiter le mouvement de l'appui de tuyau de climatisation (30) ; **caractérisé en ce que**
un de l'appui de tuyau de climatisation (30) et de l'élément de support est formé avec des goulottes s'étendant le long du sens de la longueur, et l'autre est pourvu d'éléments assortis qui sont situés dans les goulottes et sont capables de coulisser le long des goulottes, et l'appui de tuyau de climatisation (30) est supporté de façon coulissante dans l'élément de cadre de carrosserie par le biais de la coopération des goulottes et des éléments assortis.

2. Dispositif de fixation de tuyau de climatisation de véhicule selon la revendication 1, dans lequel l'élément de cadre de carrosserie comprend une poutre de bas de portière (20) d'un véhicule,
la poutre de bas de portière (20) est pourvue du premier espace de logement (21).

3. Dispositif de fixation de tuyau de climatisation de véhicule selon la revendication 1, dans lequel :
l'appui de tuyau de climatisation (30) est pourvu d'au moins deux seconds espaces de logement pour loger et supporter au moins une partie d'un tuyau à haute tension et d'un tuyau à basse tension de la conduite de climatisation (10).

4. Dispositif de fixation de tuyau de climatisation de véhicule selon la revendication 1, dans lequel une portion de limitation est agencée dans le second espace de logement, et la portion de limitation peut buter contre la conduite de climatisation (10) pour empêcher le mouvement radial de la conduite de climatisation (10).

5. Dispositif de fixation de tuyau de climatisation de véhicule selon la revendication 4, dans lequel la portion de limitation comprend une protubérance agencée sur une paroi intérieure du second espace de logement ; et la protubérance et la paroi intérieure limitent ensemble la position radiale de la conduite de climatisation (10) pour empêcher, dans le sens circonférentiel de la conduite de climatisation (10), le mouvement radial de la conduite de climatisation (10),
ou
dans lequel la portion de limitation comprend une pluralité de protubérances agencées sur la paroi intérieure du second espace de logement, et la pluralité de protubérances limitent la position radiale de la conduite de climatisation (10) pour empêcher, dans le sens circonférentiel de la conduite de climatisation (10), le mouvement radial de la conduite de climatisation (10).

6. Dispositif de fixation de tuyau de climatisation de véhicule selon la revendication 3, dans lequel l'appui de tuyau de climatisation (30) est en outre pourvu d'une cavité creuse située entre les deux seconds espaces de logement, pour que les deux seconds espaces de logement soient séparés par la cavité creuse.

7. Dispositif de fixation de tuyau de climatisation de véhicule selon la revendication 1, dans lequel :
l'élément de support comprend des nervures (22), qui sont respectivement agencées sur une paire de parois intérieures qui sont agencées face à face dans le premier espace de logement (21), et les nervures (22) sont agencées sous forme d'éléments assortis dans les goulottes correspondantes de l'appui de tuyau de climatisation (30).

8. Dispositif de fixation de tuyau de climatisation de véhicule selon la revendication 7, dans lequel :
l'appui de tuyau de climatisation (30) comprend des éléments en forme de plaque agencés parallèlement les uns aux autres à des intervalles, et le sens de la longueur des éléments en forme de plaque correspond au sens de la longueur des nervures (22) ; et
les goulottes sont formées parmi les éléments en forme de plaque qui sont parallèles les uns aux autres ; ou, les éléments en forme de plaque sont pourvus d'ailes (34) s'étendant vers les nervures (22) aux deux extrémités dans le sens de la largeur, et les goulottes sont formées parmi les ailes (34) aux deux extrémités.

9. Dispositif de fixation de tuyau de climatisation de véhicule selon la revendication 1, dans lequel :
l'élément de support comprend des nervures (22), qui sont respectivement agencées sur une paire de parois intérieures qui sont agencées face à face dans le premier espace de logement (21), deux groupes de nervures (22) sont agencés sur chaque des parois intérieures et sont agencés parallèlement l'un à l'autre à des intervalles le long du sens de la largeur de la paroi intérieure, et les goulottes sont formées parmi les nervures (22) qui sont parallèles les unes aux autres.
